**Europäisches Patentamt**

**European Patent Office**

**Office européen des brevets**

(11) Veröffentlichungsnummer: **0 114 963**

**A1**

(12) **EUROPÄISCHE PATENTANMELDUNG**

(21) Anmeldenummer: **83111688.4**

(22) Anmeldetag: **23.11.83**

(51) Int. Cl.³: **A 01 K 31/04**
**A 01 K 1/015**

(30) Priorität: **30.12.82 DE 8236853 U**

(43) Veröffentlichungstag der Anmeldung:
**08.08.84 Patentblatt 84/32**

(84) Benannte Vertragsstaaten:
**BE DE FR GB NL**

(71) Anmelder: **Roess, Hans**
**Bernhardstrasse 24**
**D-2932 Twistringen(DE)**

(72) Erfinder: **Roess, Hans**
**Bernhardstrasse 24**
**D-2932 Twistringen(DE)**

(74) Vertreter: **Dipl.-Ing. H. Hauck Dipl.-Phys. W. Schmitz**
**Dipl.-Ing. E. Graalfs Dipl.-Ing. W. Wehnert Dr.-Ing. W.**
**Döring**
**Neuer Wall 41**
**D-2000 Hamburg 36(DE)**

(54) Unterlagen für Taubenschläge, Taubentransportbehälter, Taubennester oder dergleichen.

(57) Unterlage für Taubenschläge, Taubentransportbehälter, Taubennester oder dergleichen, gekennzeichnet durch eine wirrvliesartige Schicht (11) aus natürlichen Fasern, die durch Steppstiche (14) in sich zusammengehalten und an einer gewirk- oder gewebeartigen Unterschicht (12) befestigt ist.

Fig. 2

EP 0 114 963 A1

Croydon Printing Company Ltd

PATENTANWÄLTE
DR.-ING. H. NEGENDANK (-1973)

HAUCK, SCHMITZ, GRAALFS, WEHNERT, DÖRING 0114963

HAMBURG    MÜNCHEN    DÜSSELDORF

*1*

PATENTANWÄLTE · NEUER WALL 41 · 2000 HAMBURG 36

Hans Roess
Bernhardstr. 24

2832 Twistringen

Dipl.-Phys. W. SCHMITZ - Dipl.-Ing. E. GRAALFS
Neuer Wall 41 · 2000 Hamburg 36
Telefon + Telecopier (040) 36 67 55
Telex 02 11 769 input d

Dipl.-Ing. H. HAUCK - Dipl.-Ing. W. WEHNERT
Mozartstraße 23 · 8000 München 2
Telefon + Telecopier (089) 53 92 38
Telex 05 216 553 pamu d

Dr.-Ing. W. DÖRING
K.-Wilhelm-Ring 41 · 4000 Düsseldorf 11
Telefon (02 11) 57 50 27

ZUSTELLUNGSANSCHRIFT / PLEASE REPLY TO:        HAMBURG,    22. November 1983

Unterlagen für Taubenschläge, Taubentransportbehälter, Taubennester oder dergleichen
-------------------------------------------------------

Tauben befördern normalerweise ihren Kot außerhalb der Nester.

Für den Taubenzüchter, der eine Reihe von Brieftauben hält, ist die Reinigungsprozedur außerordentlich lästig und aufwendig.

Beim Transport, beispielsweise zu Wettbewerben, werden mehrere Brieftauben in einem Behälter gehalten. Die Behälter verschmutzen naturgemäß und müssen bei Wiederverwendung gereinigt werden, was wiederum sehr lästig ist. Werden die Tauben in Behältern mit geschlossenen Böden transportiert, können sie sich am Boden nicht ausreichend festhalten, so daß sie bei Rüttelbewegungen und in Kurven ihren Halt verlieren und sich gegenseitig verletzen können.

European Patent Attorneys    Zugelassene Vertreter beim Europäischen Patentamt
Deutsche Bank AG Hamburg, Nr. 05/28 497 (BLZ 200 700 00) · Postscheck Hamburg 2842-206
Dresdner Bank AG Hamburg, Nr. 933 60 35 (BLZ 200 800 00)

Vor dem Brutvorgang baut die Taube sich ein Nest aus dem Material, das ihr vom Züchter zur Verfügung gestellt wird, z.B. aus Stroh. Zu diesem Zweck stellt der Züchter ferner häufig Behältnisse bereit, in denen die Taube das Nest einrichten kann. Durch den Nestbau verzögert sich der Brutvorgang jedoch erheblich.

Der Neuerung liegt die Aufgabe zugrunde, eine vielseitig verwendbare Unterlage im Bereich der Taubenhaltung und -züchtung zu schaffen.

Diese Aufgabe wird neuerungsgemäß gelöst durch eine vliesartige Schicht aus natürlichen Fasern, die durch Steppstiche in sich zusammengehalten und an einer gewirk- oder gewebeartigen Unterlage befestigt ist.

Die neuerungsgemäße Unterlage kann außerordentlich preiswert und unaufwendig hergestellt werden, z.B. nach einer weiteren Ausgestaltung der Neuerung aus gehäckseltem Stroh, Kokosfasern, gehäckseltem Heu, Torffasern, Holzwolle oder dergleichen. Besonders wenig aufwendig ist gehäckseltes Stroh. Das wirrvliesartige Material wird mit Hilfe einer geeigneten Vorrichtung in eine gleichmäßig dicke Schicht gebracht und mit Hilfe von Steppstichen in sich zusammengehalten und an einer gewirk- oder gewebeartigen Unterlage befestigt. Für die Steppstiche werden nach einer weiteren Ausgestaltung der Erfindung für das Garn vorzugsweise natürliche Fasern verwendet, z.B. Baumwolle.

Die Unterlage ermöglicht die "Anbindung" der Steppstiche und sichert mithin die Formhaltigkeit der Unterlage. Sie kann nach einer weiteren Ausgestaltung der Neuerung netz- oder gitterartig aus Kunststoffäden bestehen. Alternativ kann die Unterlage auch ein Jutegewebe sein. Bei Verwendung von Kunststoffäden werden diese miteinander verknotet oder verschweißt, damit das Gitter oder das Netz seine Form behält.

Die Größe der Unterlage hängt naturgemäß vom jeweiligen Anwendungszweck ab. Beim Einsatz in Taubentransportbehälter ist sie so bemessen, daß sie passend auf den Boden gelegt werden kann. Sie bietet dadurch für die Tauben einen sicheren Untergrund, an dem sie sich ausreichend festhalten können. Der Kot bleibt nicht an der Oberfläche der Unterlage, sondern fällt zwischen die einzelnen Wirrvliesfasern. Ist ein bestimmter Verschmutzungsgrad erreicht, kann die Unterlage durch eine frische ersetzt werden.

Ähnlich gestaltet sich die Verwendung der neuerungsgemäßen Unterlage in festen Taubenschlägen oder dergleichen. Sie werden in gewünschter Länge und Breite auf dem Boden ausgelegt und können vom Züchter nach einer gewissen Verschmutzung ausgetauscht werden. Die Reinigungsarbeit hält sich dadurch in bescheidenen Grenzen.

Da die neuerungsgemäße Unterlage aus natürlichen Fasern gebildet ist, ist sie biologisch abbaubar. Die verschmutzten Unterlagen können daher ohne weiteres in Mülldeponien oder auch auf Komposthaufen gelagert werden. Sie können auch ohne weiteres verbrannt werden. Die Beseitigung des Kotes mit den Unterlagen bereitet daher keinerlei Schwierigkeiten.

Besonders vorteilhaft ist die Anwendung der neuerungsgemäßen Unterlage bei Taubennestern. Hierzu sieht eine Ausgestaltung der Neuerung vor, daß die Unterlage kreisförmig ist zur Einlage in eine runde Schale aus festem Material, vorzugsweise Kunststoff, Ton oder dergleichen. Ein derart ausgebildetes Taubennest besitzt eine Reihe von besonderen Vorteilen. Die Zuchttaube kann unmittelbar mit dem Brüten beginnen. Ihr eigener Nestbau, der viele Tage in Anspruch nimmt, entfällt. Die neuerungsgemäße Unterlage bietet die gleichen Vorzüge wie ein von der Taube selbst errichtetes Nest. Der Kot bleibt nicht unmittelbar auf der Oberfläche. Da die eingelegte Schicht gleichmäßig gearbeitet ist, ergibt sich eine gleichmäßig gerundete Mulde zur Aufnahme der Eier, welche nicht Gefahr laufen, zerdrückt zu werden, da die neuerungsgemäße Einlage ein ausreichend weiches Polster darstellt. Der Aufbau der neuerungsgemäßen Unterlage sichert zudem eine ausreichende Formhaltigkeit, so daß die Nestkonstruktion auch
nach längerer Brutzeit intakt bleibt. Zwischen den Brutzeiten kann die neuerungsgemäße Unterlage ausgewechselt und
durch eine frische ersetzt werden, wenn sie zu stark verschmutzt ist.

Nach einer weiteren Ausgestaltung der Neuerung ist vorgesehen, daß der Rand der in die Mulde der Schale eingeformten Einlegeschicht bis zum Rand der Schale reicht. Die
neuerungsgemäße Unterlage ist so bemessen, daß sie, in die
Mulde der Schale eingeformt, nicht über die Schale hinausreicht, so daß der Schalenrand selbst eine Begrenzung des
Nestes bildet. Dadurch werden keine Fasern aus dem Nest
herausgezogen und getreten, was zur Beschädigung des Nestes
führen könnte.

Die neuerungsgemäße Unterlage ist nach einer weiteren Ausgestaltung der Neuerung vorzugsweise an der Unterseite der
Schale befestigt. Zu diesem Zweck weist der Boden der Schale
vorzugsweise eine Öffnung auf, durch die z.B. ein Faden oder
Draht hindurchgesteckt werden kann zur Befestigung der Unterlage am Boden der Schale. Es versteht sich, daß auch andere
Befestigungsmöglichkeiten denkbar sind.

Ausführungsbeispiele der Neuerung sollen nachfolgend anhand von Zeichnungen näher erläutert werden.

Fig. 1    zeigt eine Draufsicht auf eine neuerungsgemäße Unterlage.

Fig. 2    zeigt einen Schnitt durch die Darstellung nach Fig. 1 entlang der Linie 2-2.

Fig. 3    zeigt eine Draufsicht auf einen Teil einer Unterschicht der Unterlage nach Fig. 1.

Fig. 4    zeigt perspektivisch ein Taubennest mit einer Unterlage nach der Neuerung.

Fig. 5    zeigt teilweise die Untersicht des Taubennestes nach Fig. 4.

Bevor auf die in den Zeichnungen dargestellten Einzelheiten näher eingegangen wird, sei vorangestellt, daß jedes der beschriebenen und gezeigten Merkmale für sich oder in Verbindung mit Merkmalen der Ansprüche von neuerungswesentlicher Bedeutung ist.

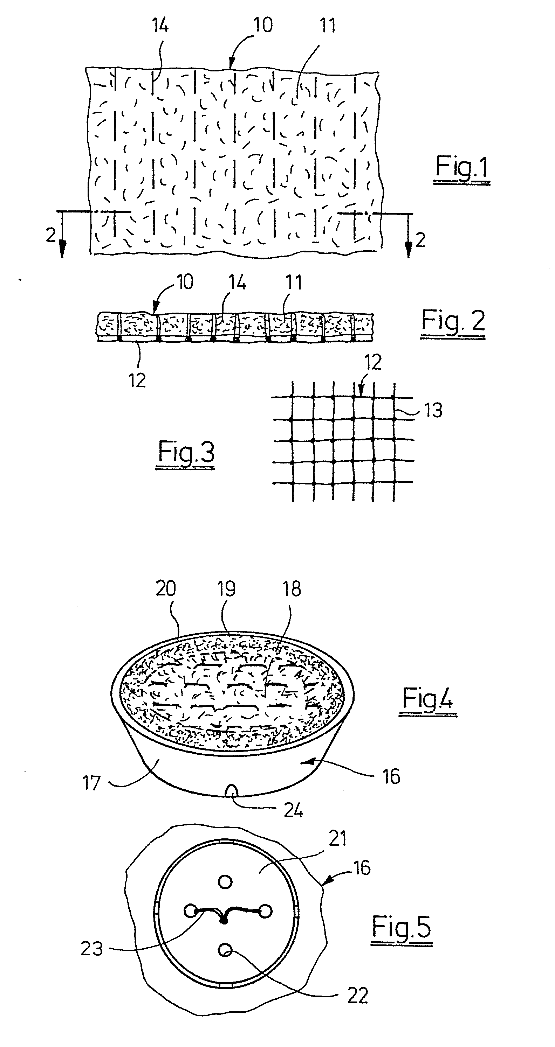

Die Unterlage nach den Figuren 1 und 2 ist insgesamt mit 10 bezeichnet. Sie hat rechteckige Kontur und ist geeignet als Einlage in einem Taubentransportbehälter oder als Unterlage bei Taubenschlägen, Taubenkäfigen usw. zur Aufnahme des Kotes. Sie besteht aus einer Oberschicht 11 annähernd gleichmäßiger Dicke, die aus einem Wirrvlies aus natürlichen Fasern gebildet ist, vorzugsweise gehäckseltem Stroh. Unterhalb der Oberschicht 11 befindet sich eine Unterschicht 12, die aus netz- oder gitterartig verlaufenden Kunststoffasern 13 besteht, wie in Fig. 3 angedeutet. Die Wirrvliesschicht 11 wird mit Hilfe von Steppstichen 14 in sich zusammengehalten. Die Steppstiche 14 sind an der Unterschicht 12 angebunden, wie aus Fig. 2 hervorgeht. Die Unterschicht 13 ermöglicht daher ein mehr oder weniger starkes Zusammenhalten der Naturfasern    mit Hilfe der Steppstiche 14.

Die Herstellung einer Unterlage nach den Figuren 1 bis 3 erfordert geringen Aufwand an Material und Herstellungskosten. Gehäckseltes Stroh beispielsweise ist in vielen Fällen kostenlos zu haben, so daß für die Materialkosten vornehmlich das Garn für die Steppstiche 14 sowie die Unterschicht 13 zu Buche schlagen. Das Garn besteht vorzugsweise aus natürlichen Fasern, z.B. Baumwolle. Bei der Herstellung wird eine Bahn in der beschriebenen Weise gebildet, aus der dann entsprechend den Anforderungen etwa eine Unterlage mit den Abmessungen nach Fig. 1 herausgeschnitten wird.

In Fig. 4 ist eine Schale 16 mit kegelstumpfförmiger Wand 17 dargestellt, die z.B. aus Ton, leichtem Kunststoffmaterial oder dergleichen besteht. In die Schale 16 ist eine Unterlage 18 eingelegt, deren Aufbau der Unterlage nach den Figuren 1 und 2 entspricht. Sie ist hier jedoch kreisförmig geschnitten und so bemessen, daß sie, in die Mulde der Schale 16 eingeformt, mit ihrem Rand 19 bis zum Rand 20 der Schale 16 reicht.

Im Boden 21 der Schale 16 sind Löcher 22 geformt, durch die hindurch ein Band oder ein Draht 23 hindurchgesteckt werden kann zur Befestigung der Unterlage 18 in der Schale 16. Seitliche Löcher 24 im Bereich der Unterlage der Schale 16 dienen zum Ablauf von Flüssigkeit. Es soll verhindert werden, daß sich Flüssigkeit unterhalb der Schale 16 ansammelt.

Anstelle einer wirrvliesartigen Schicht, die durch Steppstiche in sich zusammengehalten und an einer gewirk- oder gewebeartigen Unterschicht befestigt ist, kann auch eine genadelte Schicht aus Kokosfasern verwendet werden. Es hat sich gezeigt, daß bei Kokosfasern das Nadeln ausreicht, um eine vielseitig verwendbare Unterlage im Bereich der Taubenhaltung und -züchtung zu schaffen. Sie kann ebenso wie die oben beschriebene Unterlage kreisförmig sein und in eine vorzugsweise runde Schale aus Kunststoff, Ton oder dergleichen eingelegt werden. Dabei reicht ihr Rand vorzugsweise bis zum Schalenrand.

A n s p r ü c h e
------------------

1. Unterlage für Taubenschläge, Taubentransportbehälter,
   Taubennester oder dergleichen, gekennzeichnet durch eine
   wirrvliesartige Schicht (11) aus natürlichen Fasern, die
   durch Steppstiche (14) in sich zusammengehalten und an
   einer gewirk- oder gewebeartigen Unterschicht (12) befestigt ist.

2. Unterlage nach Anspruch 1, dadurch gekennzeichnet, daß
   gehäckseltes Stroh, Kokosfasern, gehäckseltes Heu, Torffasern, Holzwolle oder dergleichen für die wirrvliesartige Schicht (11) verwendet wird.

3. Unterlage nach Anspruch 1 oder 2, dadurch gekennzeichnet,
   daß für die Steppstiche (14) Garn aus natürlichen Fasern
   verwendet wird, vorzugsweise Baumwolle.

4. Unterlage nach einem der Ansprüche 1 bis 3, dadurch gekennzeichnet, daß die Unterschicht (12) netz- oder gitterartig aus Kunststoffäden (13) besteht.

5. Unterlage nach einem der·Ansprüche 1 bis 3, dadurch gekennzeichnet, daß die Unterschicht (12) aus Jutegewebe
   besteht.

6. Unterlage nach einem der Ansprüche 1 bis 5, dadurch gekennzeichnet, daß sie kreisförmig ist zur Einlage in
eine vorzugsweise runde Schale (16) aus festem Material,
vorzugsweise Kunststoff, Ton oder dergleichen.

7. Unterlage nach Anspruch 6, dadurch gekennzeichnet, daß
der Rand (19) der in die Mulde der Schale (16) eingeformten Einlegeschicht bis zum Rand (20) der Schale
reicht.

8. Unterlage nach Anspruch 6 oder 7, gekennzeichnet durch
ein Befestigungselement (23) zur Befestigung der Unterseite der Einlegeschicht (18) an der Schale (16).

9. Unterlage nach Anspruch 8, dadurch gekennzeichnet, daß
im Boden (21) der Schale (16) mindestens eine Öffnung
(22) vorgesehen ist.

10. Unterlage für Taubenschläge, Taubentransportbehälter,
Taubennester oder dergleichen, gekennzeichnet durch
eine wirrvliesartige genadelte Schicht aus Kokosfasern.

0114963

_Fig.1_

_Fig. 2_

_Fig.3_

_Fig 4_

_Fig.5_

Europäisches
Patentamt

**0114963**

Nummer der Anmeldung

EUROPÄISCHER RECHERCHENBERICHT

EP  83 11 1688

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-U-7 738 552  (MST-DRÄNBEDARF GMBH & CO. KG) <br> * Ansprüche 4-7, 9, 10; Figur 2 * | 1,2,4, 5,10 | A 01 K   31/04 <br> A 01 K    1/015 |
| A | US-A-1 387 759  (A.E. BERSEY) <br> * Ganzes Dokument * | 1,2 | |
| A | DE-U-6 901 957  (F. RUDER) <br> * Anspruch 1 * | 1 | |
| A | DE-U-7 423 628  (GASSEL, RECKMANN & CO.) <br> * Seite 3, Zeilen 5-14 * | 5,10 | |

RECHERCHIERTE SACHGEBIETE (Int. Cl. 3)

A 01 C    1/04
A 01 K    1/00
A 01 K    1/015
A 01 K-  31/04
A 01 K   31/07

Der vorliegende Recherchenbericht wurde für alle Patentansprüche erstellt.

| Recherchenort <br> BERLIN | Abschlußdatum der Recherche <br> 05-03-1984 | Prüfer <br> SCHOFER |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82